**Europäisches Patentamt**

**European Patent Office**

**Office européen des brevets**

(19)

(11) Veröffentlichungsnummer: **0 194 963**
**A1**

(12)

# EUROPÄISCHE PATENTANMELDUNG

(21) Anmeldenummer: 86730043.6

(22) Anmeldetag: 13.03.86

(51) Int. Cl.⁴: **A01G 13/00** , A01G 25/06 , E01C 9/00 , E01C 11/22

(30) Priorität: 15.03.85 DE 3509876

(43) Veröffentlichungstag der Anmeldung:
**17.09.86 Patentblatt 86/38**

(84) Benannte Vertragsstaaten:
**AT BE CH FR GB LI LU NL SE**

(71) Anmelder: **Menzel, Hans-Claus, Dr.**
**Walter-Flex-Strasse 32c**
**D-7000 Stuttgart 75(DE)**
Anmelder: **Schumacher, Karlheinz**
**Feldstrasse 19**
**D-5653 Leichlingen(DE)**

(72) Erfinder: **Menzel, Hans-Claus, Dr.**
**Walter-Flex-Strasse 32c**
**D-7000 Stuttgart 75(DE)**
Erfinder: **Schumacher, Karlheinz**
**Feldstrasse 19**
**D-5653 Leichlingen(DE)**

(74) Vertreter: **Maikowski, Michael, Dipl.-Ing. Dr.**
**Xantener Strasse 10**
**D-1000 Berlin 15(DE)**

(54) **Belüftungs- und Bewässerungssystem für Bäume.**

(57) Die Erfindung betrifft ein Belüftungs-und Bewässerungssystem für Bäume.

Erfindungsgemäß ist bei einem derartigen System am Ende von Drainagerohren 5, die außerhalb des Baumumfanges 6 münden, jeweils ein Filterkasten 7 vorgesehen, der bündig mit dem Straßenbelag 3 abschließt. Durch diesen Filterkasten wird ein Gasaustausch und eine Bewässerung sichergestellt, ohne die Gefahr, daß Schmutzwasser und damit Abfallstoffe und Gifte in den Boden, der den Baum umgibt, eindringen. Die Filterkästen 7 sind derart ausgebaut, daß bei den üblichen Wartungsarbeiten der Filter ausgewechselt werden kann.

Fig.1

EP 0 194 963 A1

## Belüftungs-und Bewässerungssystem für Bäume

Die Erfindung betrifft ein Belüftungs-und Bewässerungssystem für Bäume nach dem Oberbegriff des Patentanspruchs 1.

Bäume sind insbesondere in Stadtsiedlungen für das Wohlbefinden der Menschen unverzichtbar. Jedoch ist in Städten die Vitalität der Bäume sehr gering. Es ist unbedingt erforderlich, den Bäumen in Stadtsiedlungen bessere Lebensbedingungen zu bieten.

Es werden bereits verschiedene Pflegemaßnahmen für Bäume in Stadtsiedlungen ergriffen, zu denen unter anderem die Belüftung gehört. In dem Fachbuch "Bäume in der Stadt" herausgegeben von Hermann Meyer, erschienen in Stuttgart 1982 werden auf den Seiten 155 -159 Belüftungsmaßnahmen für Bäume unter Verwendung von Belüftungsrohren beschrieben. Diese Belüftungsmaßnahmen erfolgen zum Schutz gegen Gas, das aus Gasleitungen in den Boden sickert. Es werden in den Boden eingegrabene Belüftungsrohre verwendet, die beispielsweise parallel zu einer Gasleitung zwischen dieser und den Baumscheiben angeordnet werden.

Unter dem allgemeinen Gesichtspunkt einer Versorgung von Bäumen in Stadtsiedlungen wird in dem zitierten Buch auf Seiten 284f als Pflegemaßnahme eine Belüftung erörtert. Es wird darauf hingewiesen, daß der Luftaustausch im Boden häufig nicht wegen der Plattenflächen, Teerdecken usw. gewährleistet ist. Um eine Belüftung des Wurzelbereiches zu gewährleisten, werden um die Bäume herum Belüftungsrohre eingebaut, deren Mündungen mit einer geschlitzten Betonplatte abgedeckt werden. Es ist auch bekannt, Belüftungsrohre oder Rohrsysteme, unter anderem auch Ringdrainagen, im Bereich der Wurzeln anzuordnen. Ein derartiges Belüftungssystem kann auch zur Bewässerung und Düngung verwendet werden. Im Boden sind im Bereich der Wurzeln Drainrohre angeordnet, die beispielsweise an der Baumscheibe des Baumes münden. Der Baum ist von befestigten Flächen umgeben.

Die Erfahrung hat gezeigt, daß Bäume im Altbestand nicht mit einem Baumrost nur in Stammnähe saniert werden. Der Gasaustausch, die Wasserzufuhr und auch die Flüssigdüngung können nur im erweiterten Bereich außerhalb des Baumkronendurchmessers erfolgreich durchgeführt werden. An diesen Stellen ist aber mit größerer Verschmutzung zu rechnen, die in kürzester Zeit jede Zuleitung unbrauchbar macht.

Der Erfindung liegt die Aufgabe zu Grunde, auf ökonomische Weise eine ausreichende Versorgung von Bäumen in Stadtsiedlungen sicherzustellen.

Erfindungsgemäß wird dies durch die technische Lehre des Patentanspruchs 1 ermöglicht. In vorteilhafter Weise werden außerhalb des Baumumfangs Filterkästen mit verkehrssicheren Rosten angeordnet und insbesondere außerhalb des Baumkronenumfanges um den Baumstamm herum eingesetzt.

Gasaustausch, Wasserzufuhr und Flüssigdüngung werden sichergestellt und Verschmutzungen werden zurückgehalten. Insbesondere können Ölrückstände, Benzin, Straßendreck, Hundekot und dergleichen aufgefangen werden, so daß diese nicht ins Erdreich eindringen und den Boden in der Umgebung des Wurzelbereiches verseuchen. Mit besonderem Vorteil weist der Filterkasten einen auf einen Stegkasten angeordneten Rost auf, der mit dem Straßenbelag bündig abschließen kann. In den Stegkasten ist ein herausnehmbarer Bodenrost eingesetzt, der eine Filter-und/oder Granulatlage trägt. Bei den jährlichen Wartungsarbeiten können Filter, Granulat und Vlies leicht gereinigt bzw. ausgewechselt werden. Zum Auswechsel bzw.

Reinigen ist es lediglich erforderlich, den Bodenrost aus dem Stegkasten herauszunehmen. Ein hierfür besonders geeigneter Aufbau wird dadurch gegeben, daß der Stegkasten einen Auflageflansch für den Bodenrost aufweist. Am Bodenrost kann wenigstens eine Handhabe angebracht sein. Es kann sich hierbei um ein paar Handgriffe oder Handschlaufen handeln. Zur Wartung ist es lediglich erforderlich, das Filtermaterial, beispielsweise an zwei Griffen herauszuheben. Der Bodenrost kann dann wieder eingelegt und mit einem neuen Filter beschichtet werden.

Mit besonderem Vorteil kann die Filterlage ein Glasfaser-oder Kunststoffaservlies sein. In den Filterkasten kann sowohl eine Filterlage zusammen mit einer Granulatschicht eingesetzt werden. Insbesondere kann zwischen zwei im Filterkasten angeordnete Filterlagen ein Langzeitdüngemittel eingelagert werden. Es liegt im Rahmen der Erfindung, unter dem Bodenrost eine Düngepfanne anzuordnen, in die das Langzeitdüngemittel eingebracht werden kann.

Ein besonders günstiger Einbau wird dadurch erreicht, daß der Stegkasten auf einem Fundament sitzt. Mit besonderem Vorteil kann der Filterkasten in einem Baumrost eingesetzt sein. Es ist eine Vergrößerung der üblichen Baumroste auf Grundflächen möglich, die für den heranwachsenden Baum je nach Sortenart abgestimmt werden können. Es können Baumrostläufer an sehr schmalen Bürgersteigen vorgesehen werden, die mit Filterkästen ausgerüstet sind. Derart bestückte Baumroste können aber auch als Wasser-und Düngerleiter für Parkbäume in Wiesen und Pflanzenbereiche eingesetzt werden. insbesondere sind derartig mit Filterkästen versehene Baumroste im Einsatzbereich von Benzin-oder Ölabscheidern von Vorteil.

Mit besonderem Vorteil wird unter Aufrechterhaltung einer günstigen Belüftung und Bewässerung eine dem Boden nicht kompremierende freitragende Überbrückung im Umfeld des Baumes geschaffen.

Bei einem weiteren speziellen Anwendungsfall kann wenigstens ein Filterkasten am Rand einer überhöhten Bauminsel im Bereich der Traufkante der Baumkrone angeordnet sein. Es ist aber auch möglich, daß wenigstens ein Filterkasten in einem von Baumrosten gebildeten Abschlußrand einer Bauminsel angeordnet ist. Derartige überhöhte Bauminseln werden benötigt, wenn beispielsweise Altbäume ebenerdiges Wurzelwerk aufweisen und damit eine schlechte Überhöhung der Baumscheibe notwendig wird.

Eine leichte Wartung wird dadurch ermöglicht, daß am Bodenrost und gegebenenfalls an der Düngepfanne eine Handhabe angebracht ist.

Mit besonderem Vorteil kann der Filterkasten bei Belüftungs-und Bewässerungssystemen für Bäume verwendet werden, bei denen im den Wurzelbereich der Bäume umgebenden Boden Drainrohr oder -rohrsysteme angeordnet sind, die wenigstens eine Mündung an der Oberfläche haben. In diesem Fall kann am Bodenrost bzw. an der Düngepfanne ein Anschlußrohr für ein Drainagerohr angeordnet sein, das mit einer abdeckbaren Öffnung im Rost verbunden ist. Dabei kann zur leichteren Herstellung einer Verbindung mit dem Drainagerohr das Anschlußrohr konisch oder trompetenförmig ausgebildet sein.

Die Filterkästen können verkehrsstabil kontruiert werden. D. h. sie können Radlasten bis zu mehreren Tonnen aufnehmen. Besonders günstig ist es, wenn der Rost, der Stegkasten, der Bodenrost und ggfs. die Düngerpfanne aus einem Faserbeton, wie beispielsweise Glasfaserbeton oder armiertem Beton oder GFK oder beschichtetem Stahl hergestellt sind. Die Teile können aber auch aus stabilem Kunststoff gefertigt sein.

Je nach den örtlichen Bauverhältnissen kann es erforderlich sein, daß der Filter einen rechteckigen Grundriß, wie beispielsweise einen quadratischen Grundriß aufweist. Die Filterkästen können aber auch kreissegmentförmige oder kreisförmige Grundrisse haben.

Insbesondere können mehrere Filterkästen um einen Baum herum angeordnet sein. Jeder Filterkasten kann dann mit einem Drainagerohr verbunden sein, das sich radial zum Baumstamm hin erstreckt, so daß sich eine sternförmige Versorgung des Baumes von den Filterkästen aus ergibt. Es ist auch möglich, daß die Filterkästen zusätzlich an eine Ringdrainageleitung angeschlossen sind oder Teil einer Ringdrainageleitung bilden. Die Filterkästen aus glasfaserverstärktem Beton können für sehr starke Verkehrslasten auch über größere Strecken freitragend eingesetzt werden. Eine Bodenverdichtung im Wurzelbereich wird dadurch ausgeschaltet. Weiterhin ist es möglich, die aus Beton gefertigten Filterkästen farblich den Verkehrsflächen anzupassen.

Ausführungsbeispiele der Erfindung sollen in der folgenden Beschreibung unter Bezugnahme auf die Fig. der Zeichnung erläutert werden.

Es zeigen:

Fig. 1 eine schematische Schnittansicht einer Anordnung eines Filterkastens,

Fig. 2 eine Schnittansicht eines Filterkastens,

Fig. 2A + 2B Schnittansichten weiterer Ausführungsformen eines Filterkastens,

Fig. 3 eine schematische Draufsicht auf unterschiedliche Filterkästen und deren Anordnung,

Fig. 4 eine Draufsicht auf eine weitere Filterkastenanordnung,

Fig. 5 eine Draufsicht auf eine Ausführungsform eines Belüftungs-und oder Bewässerungssystems und

Fig. 6 schematische Schnittansichten einer Ausführungsform mit Bauminsel.

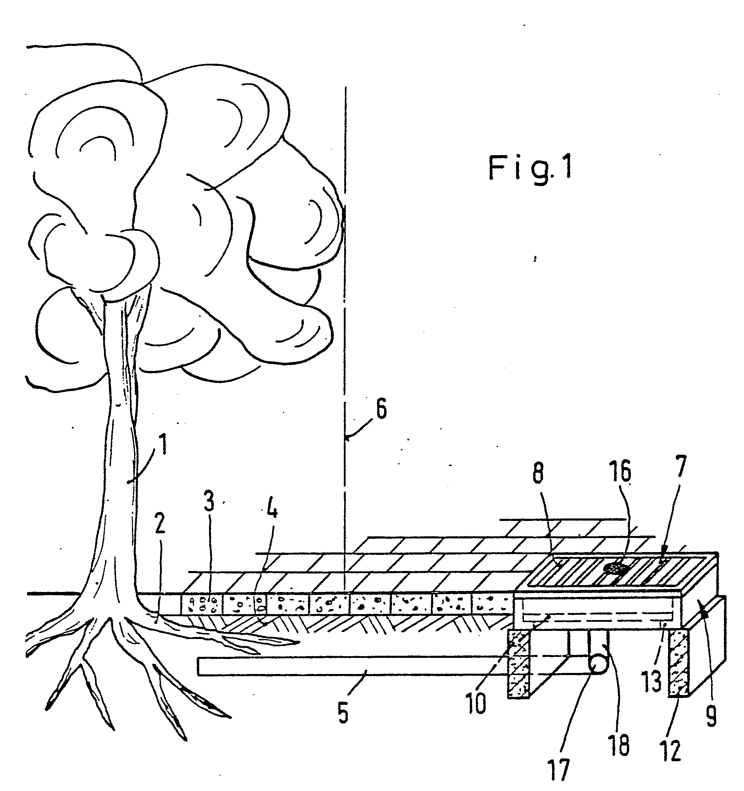

Fig. 1 zeigt einen Baum 1, dessen Wurzelbereich 2 sich im Boden 4 unter dem Straßenbelag 3 erstreckt. Außerhalb des Baumkronenumfanges 6 ist ein Filterkasten 7 angeordnet, der mit einem Drainagerohr 5 verbunden ist.

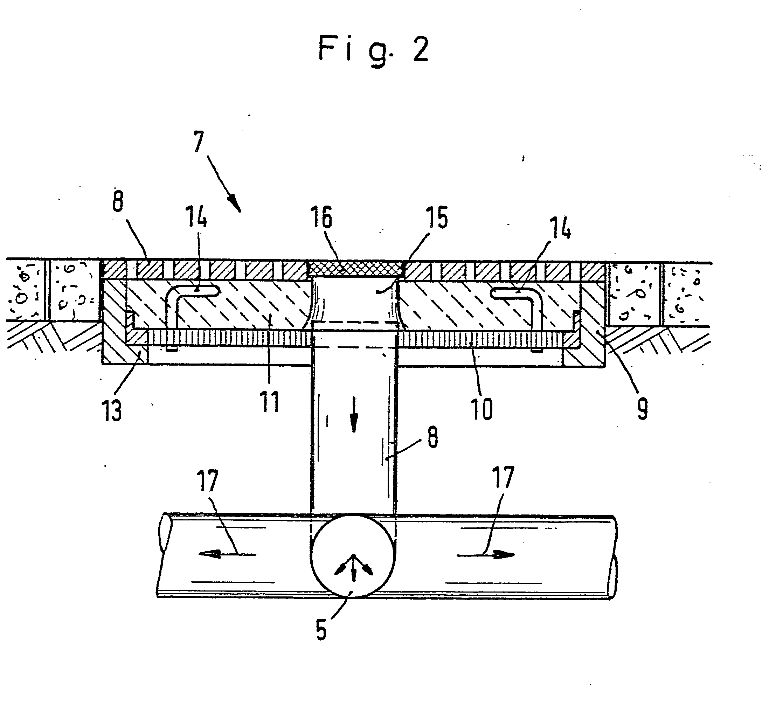

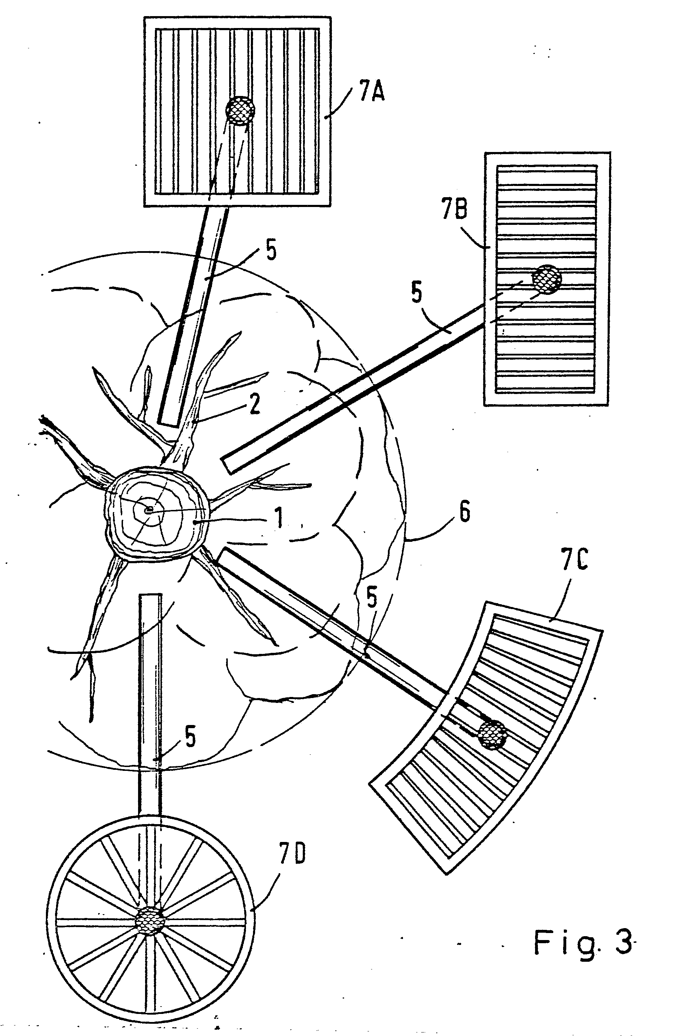

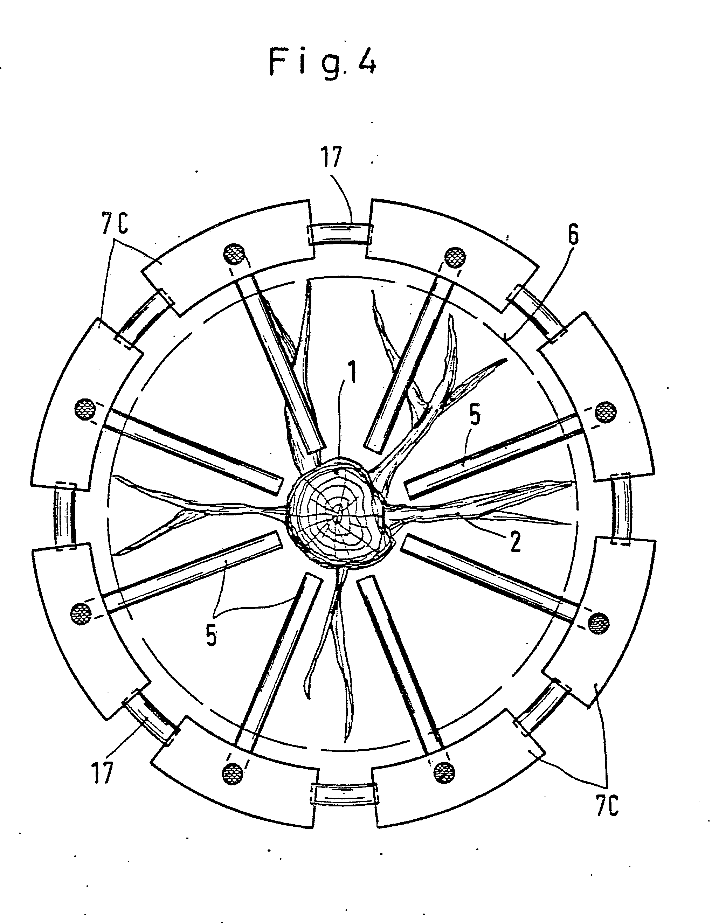

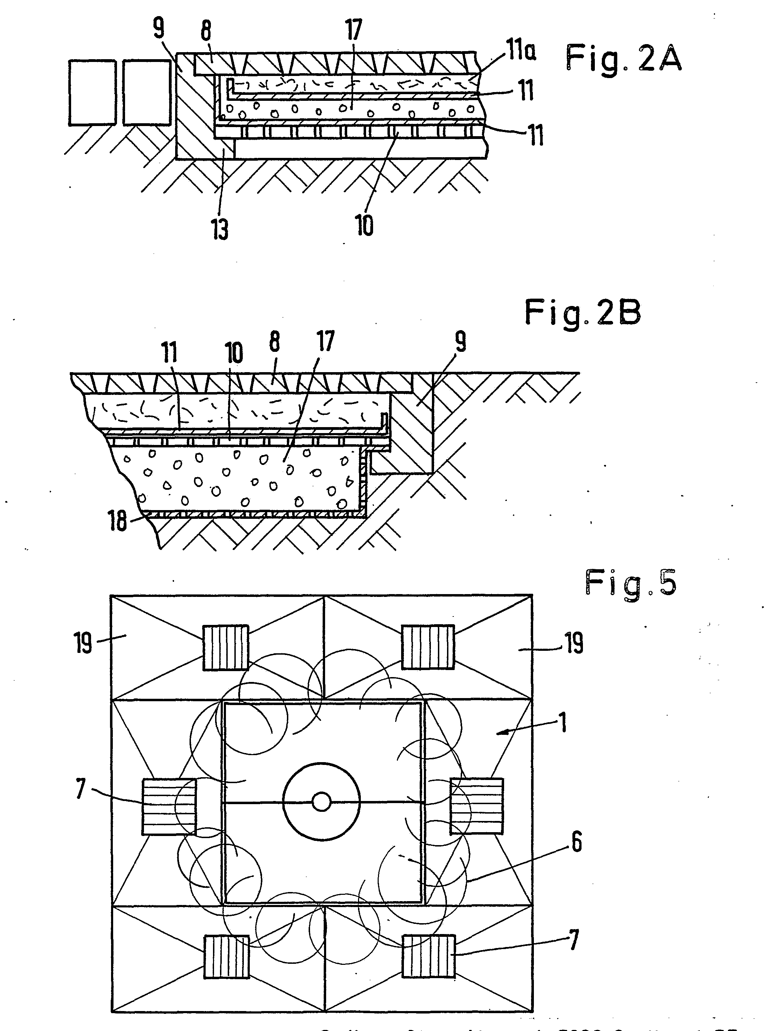

Dieser Filterkasten 7 weist einen Rost 8 auf, der mit dem Straßenbelag 3 bündig abschließt und farblich auf diesen abgestützt ist. Dieser Filterkasten 7, weist, wie insbesondere aus Fig. 2 zu erkennen ist, einen Stegkasten 9 auf, auf dem der Rost 8 aufliegen kann. Dieser Stegkasten 9 hat einen Auflageflansch 13. Dieser Auflageflansch 13 trägt eine Filter-Granulat-oder Filter-Vlieslage 11. Zur Verbindung mit einem Drainagerohrsystem weist das Ringleitungen 17 und Drainagerohre 5 aufweisende Drainagerohrsystem an entsprechenden Stellen Anschlußstutzen 18 auf. Diese Anschlußstutzen 18 erstrecken sich nach oben und sind mit einem Anschlußrohr 15 verbunden, das am Bodenrost 10 angeordnet ist und sich nach oben zu einer abdeckbaren Öffnung 16 im Rost 8 erstreckt. Dieses Anschlußrohr 15 kann konisch oder trompetenförmig ausgebildet sein, damit eine einfache Steckverbindung mit dem Anschlußstutzen 18 hergestellt werden kann. Über dieses System kann der Baum 1 bewässert bzw. gedüngt werden.

Der Bodenrost 10 weist, wie dargestellt, zwei Handhaben 14 auf, die als Handgriffe ausgebildet sind. Statt dieser Handgriffe können auch Schlaufen oder dergleichen vorgesehen sein. Bei den Wartungsarbeiten ist es lediglich erforderlich, mittels dieser Handhaben 14 den Bodenrost 10 herauszuheben und die Filter-Granulatlage 11 auszuwechseln.

Dieser Filterkasten 7 kann auch ohne Anschlußrohr 15 hergestellt und eingebaut werden.

Bei der in Fig. 2A dargestellten Ausführungsform ist im Filterkasten eine Granulatlage 11a vorgesehen. Diese Granulatlage 11a liegt auf einer Filterlage 11. Unterhalb dieser Filterlage 11 befindet sich ein Langzeitdünger 17, der auf einer weiteren Filterlage 11 liegt, die sich auf dem Bodenrost 10 abstützt.

Bei der in Fig. 2B dargestellten Ausführungsform ist unter den Bodenrost 10 in den Stegkasten 9 mit einem Flanschrand noch eine Düngerpfanne 18 eingehängt, in der ein Langzeitdünger 17 angeordnet ist.

Bei diesen Ausführungsformen kann mit der sauberen Bewässerung gleichzeitig eine Düngung durchgeführt werden.

Wie schematisch Fig. 3 zeigt, kann der Filterkasten 7 unterschiedliche Grundrisse haben. In Fig. 3 ist ein Filterkasten 7 mit quadratischem Grundriß A und mit rechteckigem Grundriß B dargestellt. Ferner sind segmentförmige Grundrisse bei C gezeigt und ein kreisförmiger Grundriß bei D.

Wie die Fig. 3 und 4 zeigen, können mehrere Filterkästen 7 um den Baum 1 herum angeordnet werden. Je nach den baulichen Gegebenheiten können die in Fig. 3 dargestellten Grundrißformen A -D Anwendung finden.

In Fig. 4 ist ein Ausführungsbeispiel dargestellt, bei dem die Filterkästen 7 einen kreissegmentförmigen Grundriß C haben. Anstatt dieser Grundrißform können selbstverständlich auch die anderen Grundrißformen oder gemischte Grundrißformen verwendet werden.

Jeder Filterkasten 7 kann mit einem Drainagerohr 5 verbunden sein, so daß sich eine Anordnung ergibt, in der sich die Drainagerohre 5 sternförmig zum Baum 1 hin erstrecken. Wie Fig. 4 zeigt, können die Filterkästen 7 darüberhinaus noch an eine Ringleitung 17 angeschlossen sein oder Teile einer Ringleitung 17 bilden.

Wie Fig. 5 zeigt, können beim heranwachsenden Baum 1 die bereits vorhandenen Baumroste durch weitere Baumroste 19 erweitert werden, in die Filterkästen 7 eingesetzt sind. Auch diese Filterkästen 7 können mit einem nicht dargestellten Drainrohrsystem verbunden sein.

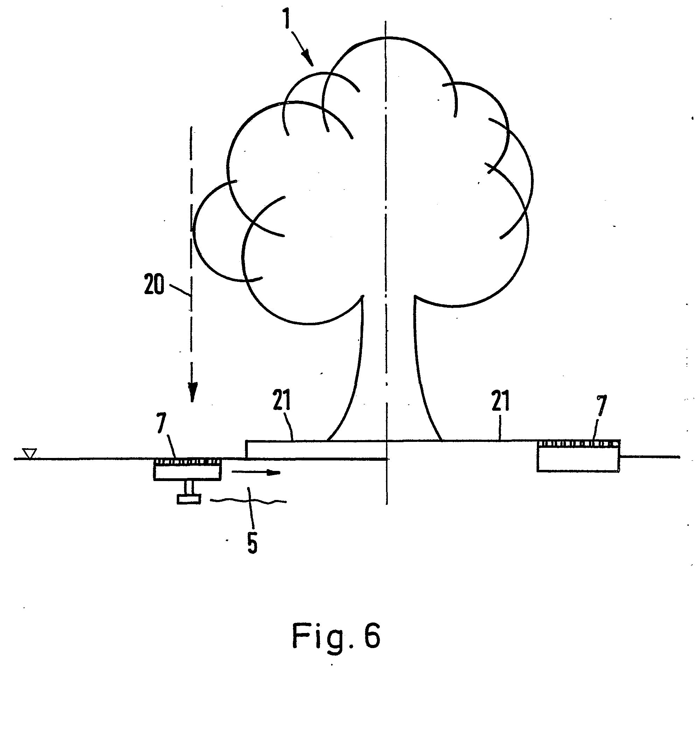

In Fig. 6 ist ein Baum 1 mit einer Bauminsel 21 dargestellt. Diese Bauminseln 21 können bei älteren Bäumen vorgesehen sein. Sie werden aber auch als Vorsorgemaßnahme bei Neuanpflanzungen vorgesehen. In der linken Hälfte der Fig. 6 ist eine Bauminsel 21 dargestellt, die von mehreren Filterkästen 7 umgeben ist. Die Filterkästen 7 liegen in der Höhe des Straßen-oder Bodenniveaus, über das sich die Bauminsel 21 erhebt. Wie in der linken Hälfte der Fig. 6 dargestellt, sind diese Filterkästen 7 im Bereich Traufkante 20 des Baumes 1 angeordnet. Diese Filterkästen 7 können mit einem Drainrohrsystem 5 in Verbindung stehen.

Bei einer abgeänderten Ausführungsform des Belüftungsund/oder Bewässerungssystem, das in der rechten Hälfte der Fig. 6 dargestellt ist, weist die Bauminsel 21 einen von Baumrosten gebildeten Rand auf, wobei die Baumrostoberfläche oberhalb des Straßen-oder Bodenniveaus liegt. Auch in diesen Rand können Filterkästen 7 eingesetzt sein, die, falls gewünscht, wiederum mit einem Drainrohrsystem verbunden sein können.

**Ansprüche**

1. Belüftungs-und Bewässerungssystem für Bäume, insbesondere für den Baumbestand von Stadtsiedlungen, dadurch gekennzeichnet, daß

im Bereich des Baumkronenumfangs (6) wenigstens ein Filterkasten (7) in den Boden (4) eingelassen ist, daß der Filterkasten (7) einen auf einem Stegkasten (9) angeordneten Rost aufweist, der mit dem Straßenbelag (3) bündig abschließt, und daß in den Stegkasten (9) ein herausnehmbarer Bodenrost (10) eingesetzt ist, der mindestens eine Filter-und/oder Granulatlage (11) trägt.

2. Belüftungs-und Bewässerungssystem nach Anspruch 1, dadurch gekennzeichnet, daß

die Filterlage (11) ein Glasfaser-oder Kunststoffaservlies ist.

3. Belüftungs-und Bewässerungssystem nach Anspruch 1 oder 2, dadurch gekennzeichnet, daß

zwischen zwei Filterlagen (11) ein Langzeitdüngemittel (17) eingelagert ist.

4. Belüftungs-und Bewässerungssystem nach Anspruch 1 oder 2, dadurch gekennzeichnet, daß

unter dem Bodenrost (10) eine Düngerpfanne (18) angeordnet ist.

5. Belüftungs-und Bewässerungssystem nach einem der Ansprüche 1 -4, dadurch gekennzeichnet, daß

der Stegkasten (9) einen Auflageflansch (13) für den Bodenrost (10) und gegebenenfalls die Düngerpfanne (18) aufweist.

6. Belüftungs-und Bewässerungssystem nach einem der Ansprüche 1 -4, dadurch gekennzeichnet, daß

der Stegkasten (9) auf einem Fundament (12) sitzt.

7. Belüftungs-und Bewässerungssystem nach einem der Ansprüche 1 -6, dadurch gekennzeichnet, daß

der Filterkasten (7) in einem Baumrost (19) eingesetzt ist.

8. Belüftungs-und Bewässerungssystem nach einem der Ansprüche 1 -7, dadurch gekennzeichnet, daß

wenigstens ein Filterkasten (7) am Rand einer über hohten Bauminsel (21) im Bereich der Traufkante (20) der Baumkrone angeordnet ist.

9. Belüftungs-und Bewässerungssystem nach einem der Ansprüche 1 -8, dadurch gekennzeichnet, daß

wenigstens ein Filterkasten (7) in einem von Baumrosten gebildeten Abschlußrand einer Bauminsel (21) angeordnet ist.

10. Belüftungs-und Bewässerungssystem nach einem der Ansprüche 1 -9, dadurch gekennzeichnet, daß

am Bodenrost (10) und gegebenenfalls an der Düngepfanne (18) wenigstens eine Handhabe (14) angebracht ist.

11. Belüftungs-und Bewässerungssystem nach einem der Ansprüche 1 -10 mit im den Wurzelbereich der Bäume umgebenden Boden angeordneten Drainrohen oder -rohrsystemen, die wenigstens eine Mündung an der Oberfläche haben, dadurch gekennzeichnet, daß

am Bodenrost (10) bzw. an der Düngepfanne (18) ein Anschlußrohr (15) für ein Drainagerohr (5) angeord net ist, welches mit einer abdeckbaren Öffnung (16) im Rost (8) verbunden ist.

12. Belüftungs-und Bewässerungssystem nach Anspruch 11, dadurch gekennzeichnet, daß

das Anschlußrohr (15) konisch oder trompetenförmig ausgebildet ist.

13. Belüftungs-und Bewässerungssystem nach einem der Ansprüche 1 -12, dadurch gekennzeichnet, daß

der Rost (8), der Stegkasten (9), der Bodenrost (10) und gegebenenfalls die Düngerpfanne (18) aus faserverstärktem Beton, Glasfaserbeton oder armierten Beton oder GFK -(glasfaserverstärktem Kunststoff) oder beschichtetem Stahl hergestellt sind.

14. Belüftungs-und Bewässerungssystem nach einem der Ansprüche 1 -13, dadurch gekennzeichnet, daß

der Filterkasten (8) einen rechteckigen Grundriß (A,B) aufweist.

15. Belüftungs-und Bewässerungssystem nach einem der Ansprüche 1 -13, dadurch gekennzeichnet, daß

der Filterkasten (8) einen kreissegmentförmigen Grundriß -(C) aufweist.

16. Belüftungs-und Bewässerungssystem nach einem der Ansprüche 1 -13, dadurch gekennzeichnet, daß

der Filterkasten (7) einen kreisförmigen Grundriß (D) aufweist.

17. Belüftungs-und Bewässerungssystem nach einem der Ansprüche 11 -16, dadurch gekennzeichnet, daß

mehrere Filterkästen (7) um einen Baum (1) herum angeordnet sind und sich von jedem Filterkasten (8) mindestens ein Drainagerohr (5) radial zum Baum hinerstreckt.

18. Belüftungs-und Bewässerungssystem nach Anspruch 17, dadurch gekennzeichnet, daß

die Filterkästen (7) an eine Ringdrainageleitung (17) angeschlossen sind oder Teil einer Ringdrainageleitung bilden.

Fig.1

# Fi g. 2

0 194 963

Fig. 3

# Fig. 4

0 194 963

Fig. 2A

Fig. 2B

Fig. 5

Dr Hans-Claus Menzel, 7000 Stuttgart 75
Karlheinz Schumacher, 5653 Leichlingen

Fig. 6

Dr. Hans-Claus Menzel, 7000 Stuttgart 75
Karlheinz Schumacher, 5653 Leichlingen

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A- 376 167 (SEURRE) <br><br> * Insgesamt * | 1,10, 15 | A 01 G 13/00 <br> A 01 G 25/06 <br> E 01 C 9/00 <br> E 01 C 11/22 |
| A | WO-A-8 301 364 (HENTTONEN) <br> * Seite 3, Zeile 25 - Seite 5, Zeile 20; Figuren 1-4 * | 1,2 | |
| A | US-A-3 755 966 (SMITH) <br> * Insgesamt * | 1,3 | |
| A | DE-A-2 346 268 (RÖSEMANN) <br> * Ansprüche 1-6,9 * | 1-3 | |
| A | DE-A-2 312 051 (SCHÄFER) <br><br> * Seite 3; Figuren 1-4 * | 1,17, 18 | RECHERCHIERTE SACHGEBIETE (Int. Cl.4) |
| P,X | DE-U-8 508 173 (MENZEL) <br> * Insgesamt * | 1-18 | A 01 G <br> E 01 C |

Der vorliegende Recherchenbericht wurde für alle Patentansprüche erstellt.

| Recherchenort <br> DEN HAAG | Abschlußdatum der Recherche <br> 17-06-1986 | Prüfer <br> HERYGERS J.J. |
|---|---|---|